Europäisches Patentamt

European Patent Office

Office européen des brevets

(11) Publication number: **0 238 350**
**A2**

# EUROPEAN PATENT APPLICATION

(21) Application number: **87302398.0**

(22) Date of filing: **19.03.87**

(51) Int. Cl.⁴: **G 11 B 23/03**

(30) Priority: **20.03.86 GB 8606967**

(43) Date of publication of application:
**23.09.87 Bulletin 87/39**

(84) Designated Contracting States: **DE ES FR GB NL**

(71) Applicant: **GOTHIC PRINT FINISHERS LIMITED**
**Biggin Hill Airport Industrial Estate Main Road**
**Biggin Hill Westerham, Kent TN16 3BW (GB)**

(72) Inventor: **Harvey, Albert Harold**
**100 Sandy Lane**
**Cheam Surrey (GB)**

(74) Representative: **Allard, Susan Joyce et al**
**BOULT, WADE & TENNANT 27 Furnival Street**
**London EC4A 1PQ (GB)**

(54) **Compact disc holder.**

(57) An adapter for storing a compact disc in a gramophone record sleeve or box.

Typically, the adapter is in the form of an insert for snug fitment in a record sleeve and comprises means for holding a compact disc. Thus, a preferred adapter is in the form of a pressed or moulded plastics sheet (1) designed to be fitted in a record sleeve. The sheet (1) has a central recess (4) defined by sidewalls (5a-5d, 6a-6d) to receive the compact disc. The recess (4) is provided with a stud (10) onto which the compact disc is press or snap fitted. Alternatively resilient means may be provided to grip the rim of the compact disc.

EP 0 238 350 A2

**Description**

COMPACT DISC HOLDER

The present invention relates to a holder for a compact disc.

Compact discs are laser-readable discs which occupy a small but increasing share of the recorded music market. The discs are smaller than conventional gramophone records of the same playing time, for example a compact disc with a playing time corresponding to that of a 12 inch (about 30 cm) diameter record has a diameter of only about 12 cm and is about 1 mm thick. Compact discs are typically sold in plastics boxes having dimensions of roughly 14 cm x 12.5 cm x 1 cm.

We have now appreciated that there are disadvantages associated with the packing hitherto used for compact discs and that these disadvantages could be overcome if compact discs were sold in sleeves or boxes such as those used for storing gramophone records.

The disadvantages which we have found to be associated with conventional compact disc packaging can be said to fall into two categories, financial and marketing.

In the financial category we include the costs imposed by the shape of compact disc boxes on manufacturers, retailers and consumers. For example, shops and consumers are at present obliged to purchase display and storage racks for compact discs in addition to those which, in nearly every case, they will already possess for records. The production of the compact disc boxes itself requires special equipment such as moulds and there must also be considered the need to print special inserts (labels) for compact disc boxes to give information as to the music recorded and give the box an attractive appearance. Having regard to the relatively small sales of compact discs the cost burden imposed by conventional packaging must be borne by a very small number of consumers compared with total recorded music market.

In the category of marketing disadvantages we include the difficulties in selling compact discs which arise from the small size of the present boxes. In particular the visual impact made by compact cassette boxes is small and the space for the provision of decoration and information is limited. Thus, much of the printing is generally very small and difficult to read. In the teenage pop music market there is a demand for large representations of the teenagers' pop "idols" which cannot be met by the compact disc packaging now used.

The present invention provides an adapter for storing a compact disc in a record sleeve or box. The adapter is generally in the form of an insert for a record sleeve comprising means for holding a compact disc. When inserted in a sleeve, a compact disc adapter provides compact disc storage packaging, comprising a sleeve which would be too big to store a compact disc alone and an adapter for storing a compact disc in the sleeve. The sleeve may be made out of paper material or card, for example, or of other sheet material. Such storage packaging is included in the invention.

It will be appreciated that the invention enables compact discs to be stored in gramophone record sleeves with only limited movement of the disc in the sleeve possible.

In a modification of the invention, the adapter is designed for storing a plurality of compact discs in a record box.

The adapter or holder comprises means for releasably holding the compact disc and may take a large variety of forms but preferably comprises means to hold the compact disc in a press fit or a snap fit. Thus the adapter may comprise a projection which may be received in the centre hole of the compact disc in a press or snap fit. In an alternative arrangement the adapter comprises holding means to hold the outer edge of the compact disc in a press fit or a snap fit.

Preferably, the adapter is designed for the compact disc to be removed by being lifted outwardly from a face of the adapter and means are provided to enable finger pressure to be applied to the reverse of the compact disc so as to pus the disc outwardly from the adapter. The means may be one or more holes in the adapter through which the fingers may pass to push up the rim of compact disc or it may be one or more portions of resilient material by the application of the fingers to which indirect finger pressure may be applied to the compact disc.

The adapter is preferably designed to store one compact disc in a single record sleeve or in each pocket of a gate fold (ie.double album) sleeve. The adapter is therefore relatively thin but its transverse dimensions are sufficient to occupy the bulk of the record sleeve. Thus, such adapters will generally be no thicker than about 6 mm, although a thickness of, for example, as much as about 7 mm may be acceptable. The room for lateral movement (i.e. movement of the adapter between opposed closed edges of a record sleeve) will be limited. In practice this means that an adapter for a sleeve for a 12 inch (30 cm) record will desirably be from about 29.7 to 30.7 cm wide, whilst adapters for sleeves for 10 inch (25 cm) or 7 inch (18 cm) records will desirably be from about 24.5 to 25.7 cm or from about 16.5 to 17.5 cm wide, respectively. By "wide" we refer to the overall separation between those edges of the adapter which are to be adjacent to the opposed closed edges of a record sleeve; the length of the adapter, i.e. the overall transverse dimension in the direction between the mouth of a sleeve and the opposite closed edge, will typically be slightly greater than its width, e.g. up to about or about 31.2, 26.2 or 18 cm respectively for sleeves for 12, 10 or 7 inch (30, 25, 18 cm) records. However, the adapter may be circular or square.

It is contemplated that the adapters of the invention could be designed for the storage of a stack of two or more compact discs (desirably having paper or plastics protective discs arranged therebetween) using a single adapter in a standard record box as used for boxed sets of records. Of course, such a multi-disc adapter would be thicker than an adapter for a record sleeve.

The present invention is further described by way of example only with reference to the accompanying drawings, in which:

Figure 1 is a plan view of an adapter according to the invention;

Figure 2 is a cross section along the line II-II of Figure 1; and

Figure 3 is a cross section through an alternative design of centre stud.

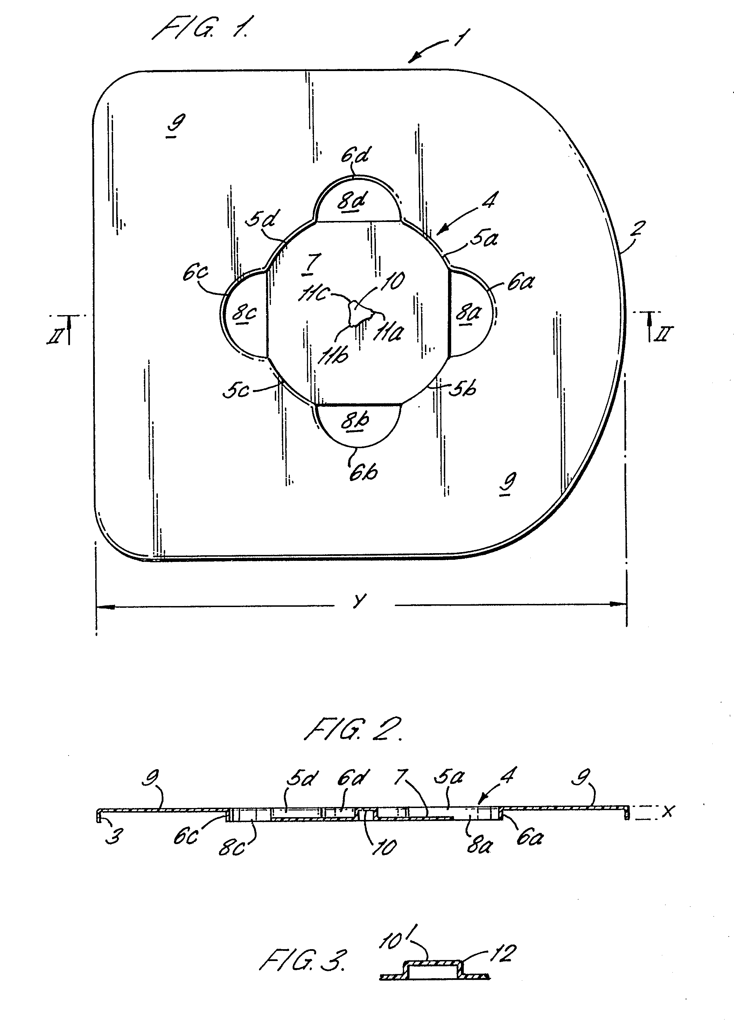

The adapter illustrated in Figure 1 is for storing a compact disc in a record sleeve for a 12 inch (30 cm) record and comprises an injection moulded sheet 1 of a plastics material, such as polypropylene for example. The sheet 1 is slightly resilient and may be about 1 mm thick, for example. The thickness will, however, be selected in accordance with the material used and the desired flexibility and appearance of the adapter. The sheet 1 may be attractively coloured or transparent and need not be of uniform thickness.

The adapter has three straight edges and one arcuate edge 2. The arcuate edge 2 is intended to be edge of the adapter at the mouth of the record sleeve. The adapter is slightly elongate since the overall separation Y between the arcuate edge 2 and the opposite straight edge (the adapter's length) is about 30.7 cm whereas the separation between the opposed straight edges (the adapter's width) is about 30.25 cm. The entire length of the periphery of the sheet 1 is bent over to provide a rigidifying flange 3 (Figure 2). The overall thickness X of the adapter is preferably about 4 or 5 mm and will generally be from about 3 to about 6 mm.

In the case of an adapter for a sleeve for a 7 inch (18 cm) record, the dimensions of the adapter are preferably about 17.7 x 17.0 x 0.4 to 0.5 cm, and will generally be in the region of 17.5 to 18 cm x 16.5 to 17.5 cm x 0.3 to 0.6 cm.

Generally in the centre of the sheet 1 there is provided a recess 4 for receiving a compact disc. In the illustrated embodiment, the recess 4 is bounded by four arcuate sidewall portions 5a,5b,5c and 5d and by four semicircular sidewall portions 6a,6b,6c and 6d which separate the arcuate wall portions 5a,5b,5c and 5d. At the base of the recess there is a floor 7 in which there are optionally provided semicircular holes 8a,8b,8c and 8d in the semicircles defined by the semicircular wall portions 6a-6d. The arcuate sidewall portions 5a-5d are continuous with the floor 7 and the major portion 9 of the sheet 1, between which the arcuate sidewall portions 5a-5d extend.

In the centre of the recess 4 a projection or stud 10 extends from the floor 7. As shown, the stud 10 comprises three arms, the ends 11a,11b and 11c of which lie on a circle fractionally larger in diameter than the central hole of a compact disc. (The central hole of a compact disc is about 15mm in diameter). One or more of the ends 11a-11c of the stud arms may be provided with a small shoulder as shown at 11a and 11b which extends beyond the circumference of a circle corresponding to the centre hole of a compact disc.

In use, a compact disc is press fitted onto the stud 10, one or more of the resilient stud arm ends 11a-11c being deformed inwardly by the boundary wall of the central hole of the compact disc and exerting a small force on the boundary wall, so as to hold the compact disc in place. The compact disc may then easily be lifted out of the recess by applying the fingers to the edge of the disc. If one or more holes 8a-8d are provided it is even easier to remove the disc since its edge may be pushed up from the back by the user putting his fingers through the semicircular holes 8a-8d.

An alternative and preferred design of centre stud 10' is illustrated in Figure 3. The stud 10' of Figure 3 is circular and its external diameter is substantially the same as the internal diameter of the centre hole of a compact disc, which is 15 mm, so that a compact disc may be friction fitted thereon. For easier placement of the disc, the top of the sidewall of the stud 10' may be provided with a bevelled or rounded rim 12. It is also advantageous for the sidewall of the stud 10' to be slightly tapered. In one embodiment the sidewall tapers outwardly by only 0.05 mm but a larger taper is also comtemplated by the invention.

The adapter with a compact disc on it may be slid into a conventional card gramophone record sleeve for storage of the compact disc. Thus, the adapter may be defined as a holder for a compact disc, which holder is adapted to be a snug fit in a record sleeve. Alternatively, it is contemplated that a stack of two or more adapters with discs thereon may be stored in a gramophone record box.

The adapter of Figure 1 is particularly advantageous because it may be made very cheaply and easily by pressing or moulding.

It will be appreciated that many modifications are possible to the adapter of Figure 1. For example, the use of a central projection or stud could be dispensed with and the arcuate wall portions 5a-5d could be adapted to hold the outer edge of the compact disc in a press fit, or such an adapted arcuate sidewall portion 5a-5d could be used in combination with a central stud, itself optionally designed to be press fitted in the centre hole of a compact disc.

In place of being adapted for the compact disc to be held in the adapter in a press fit, it is contemplated that snap fit means could be provided, such as one or more resilient radially extending projections provided at the top of at least one arcuate sidewall portion 5a-5d and/or at the top of a stud arm end 11a-11c, for example.

Less preferably, the recess 4 could be omitted so that the adapter was in the form of a flat sheet (suitably with a peripheral rigidifying flange and/or rigidifying ribs) having on one surface holding means such as a stud, or a plurality of grips to hold the edge of a compact disc.

The major portion 9 of sheet 1 of the adapter may conveniently be used for the presentation of information, decoration or trade mark material. For example, decorative and/or informative printed sheets may be adhered to the surface of the adapter and shallow recesses may be provided for such sheets. The adapter itself may be embossed with, for example, trade mark material or a copyright warning in respect of the compact disc.

Included within the invention is a tray for holding a compact disc, comprising means for releasably securing the disc (eg by friction or press fitting), the tray preferably having an overall thickness of no more than about 7 mm. The tray preferably has transverse dimensions of about 17.5 to 18 cm x 16.5 to 17.5 cm, of about 29.7 to 30.7 cm x 30.2 to 31.2 cm, or of about 24.5 to 25.7 x 25.2 to 26.2 cm, and or has a centre stud designed to be received in the centre hole of a compact disc in a friction, press or snap fit.

Further included in the invention is a compact disc holder comprising a sheet of plastics material with a recessed portion for receiving a compact disc and having a raised outer portion therearound. The holder has means for releasably holding the compact disc, eg by friction or press fitting, and preferably has an overall thickness of no more than about 7 mm. The invention also includes a holder for a compact disc, comprising a recess for receiving the compact disc and adapted for the compact disc to be releasably held by the holder, the holder having an overall thickness of not more than about 7mm.

## Claims

1. An adapter for storing a compact disc in a record sleeve.

2. An adapter as claimed in claim 1 comprising a recess for receiving a compact disc.

3. An adapter as claimed in claim 1 or 2, in which the compact disc is to be releasably held by a projection on the adapter, the projection being adapted for the central hole of the compact disc to receive it in a press fit or snap fit.

4. An adapter as claimed in any one of the preceding claims, in which the compact disc is to be releasably held by holding means to hold the edge of the compact disc in a press fit or snap fit.

5. An adapter as claimed in claim 3 or claim 4 adapted for the compact disc to be released therefrom by the direct or indirect application of finger pressure to the reverse side of the disc to push the compact disc out of its press or snap fitment with the adapter.

6. An adapter as claimed in any one of the preceding claims having an overall thickness of not more than 6 mm and designed to be snugly received in a record sleeve for a 7, 10 or 12 inch (18, 25, or 30 cm) diameter record.

7. An adapter as claimed in claim 6 having transverse dimensions of about 17.5 to 18 cm x 16.5 to 17.5 cm, about 29.7 to 30.7 cm x 30.2 to 31.2 cm, or about 24.5 to 25.7 cm x 25.2 to 26.2 cm.

8. A holder for a compact disc and adapted to be a snug fit in a record sleeve, the holder preferably having the design defined in Claim 6 or Claim 7.

9. An adapter as claimed in claim 7 or a holder as claimed in claim 8 whose dimensions are about 17.7 x 17.0 x 0.4 to 0.5 cm.

10. A compact disc package comprising a record sleeve containing an adaptor or holder as claimed in any one of the preceding claims together with a compact disc.

0238350

FIG. 1.

FIG. 2.

FIG. 3.